# EUROPÄISCHE PATENTANMELDUNG

(11) **EP 4 257 336 A1**
(43) Veröffentlichungstag der Anmeldung: **11.10.2023**
(21) Anmeldenummer: 22166470.9
(22) Anmeldetag: 04.04.2022
(51) Int. Cl.: B29C 51/42, B29C 51/06, B29K 29/00, B29L 25/00, B29L 31/00, B65B 3/02, B29C 51/10

(54) **WASCHMITTELPORTIONSEINHEITEN**

(71) Anmelder: Henkel AG & Co. KGaA, 40589 Düsseldorf (DE)
(72) Erfinder: Trebbe, Uwe, 40547 Düsseldorf (DE); Siepler, Niklas, 42327 Wuppertal (DE)

(57) **Zusammenfassung**

Portionseinheit mit mindestens einer von einem Film umgebenden befüllten Aufnahmekammer, erhältlich durch ein Verfahren, umfassend die Schritte
a) Transport eines ersten Films in Richtung einer Heizvorrichtung;
b) In Kontakt Bringen des ersten Films mit einer Oberfläche der Heizvorrichtung;
c) Erwärmen des ersten Films mittels der Heizvorrichtung;
d) Aufheben des Kontakts zwischen dem ersten Film und der Heizvorrichtung;
e) Einformen des ersten erwärmten Films in die Kavitäten einer Tiefziehmatrize unter Ausbildung eines Aufnahmebehälters mit mindestens einer Aufnahmekammer;
f) Befüllen der mindestens einen Aufnahmekammer;
g) gegebenenfalls Verschließen und Vereinzeln der befüllten Aufnahmebehälter unter Ausbildung der Portionseinheit,
wobei der Oberflächenbereich der Heizvorrichtung, der mit dem Film in Kontakt gebracht wird, mindestens eine Vertiefung aufweist und die mindestens eine Vertiefung in Schritt b) von den Teilbereichen des ersten Films bedeckt wird, welche in Schritt e) in die Kavität der Tiefziehmatrize eingeformt werden.

## Beschreibung

Die vorliegende Erfindung betrifft eine Portionseinheit, insbesondere eine Wasch- oder Reinigungsmittelportionseinheit mit mindestens einer, von einem Filmmaterial gebildeten Aufnahmekammer.

An die Konfektions- und Angebotsformen von Konsumgütern werden sich kontinuierlich ändernde Anforderungen gestellt. Im Bereich der Wasch- oder Reinigungsmittel liegt beispielsweise seit geraumer Zeit ein Augenmerk auf deren bequemer Dosierung durch den Verbraucher und der Vereinfachung der zur Durchführung eines Wasch- oder Reinigungsverfahren notwendigen Arbeitsschritte. Eine technische Lösung bieten vorportionierte Wasch- oder Reinigungsmittel, beispielsweise Folienbeutel mit einer oder mehreren Aufnahmekammern für feste oder flüssige Wasch- oder Reinigungsmittel.

Ein für die Herstellung dieser Folienbeutel relevanter Trend, ist die Miniaturisierung dieser Folienbeutel. Hintergrund dieser Entwicklung sind neben einer höheren Verbraucherakzeptanz aufgrund vereinfachter Handhabung insbesondere Nachhaltigkeitsaspekte, beispielsweise in Bezug auf die Menge der eingesetzten Verpackungsmittel.

Die Herstellung der zuvor beschriebenen Folienbeutel erfolgt durch mehrstufige Prozesse, in deren Verlauf wasserlösliche Folienmaterialien beispielsweise durch Einwirkung von Wärme und Unterdruck in Kavitäten eingeformt, befüllt und nachfolgend versiegelt werden. Während die Erwärmung der Folien deren Plastizität erhöht, bewirkt die aus dem an die erwärmte Folie angelegten Unterdruck resultierende Kraft deren Streckung und plastische Verformung. Der Film wird in diesem Verfahren über seine Fläche nicht homogen gestreckt, vielmehr wechseln Bereiche hoher Streckung, beispielsweise im Randbereich der Kavität mit Bereichen geringerer Streckung ab. Aus einem Folienmaterial mit homogener Foliendicke entsteht so eine verformte Folie in Form eines Aufnahmebehälters mit einer heterogenen Foliendickenverteilung. Diese heterogenen Foliendickenverteilung wird umso ausgeprägter ausfallen, je stärker das ursprüngliche Folienmaterial verformt wird. Die Stärke der Verformung nimmt in der Regel beispielsweise mit der Anzahl der in den Aufnahmebehälter eingeformten Aufnahmekammern oder deren Tiefe zu.

Neben anderen Faktoren bestimmen sowohl die Foliendickenverteilung als auch die absolute Foliendicke die haptischen, optischen und mechanischen Eigenschaften des Folienbeutels. Folienbeutel mit großen Unterschieden in der Foliendicke werden häufig als weniger ansprechend wahrgenommen. Folienbeutel mit geringer minimalen Foliendicke verformen sich leichter unter ihrem Eigengewicht als entsprechende Folienbeutel mit höherer Foliendicke und wirken schlaff. Diese Folienbeutel halten mechanischer Belastung in geringerem Maße stand und lösen sich bei Wasserzutritt zu schnell. Die beiden letztgenannten Eigenschaften sind für Folienbeutel nicht nur im Bereich von Herstellung, Transport und Lagerung relevant, sondern haben insbesondere Auswirkungen auf die Produktsicherheit, beispielsweise bei versehentlicher oraler Aufnahme.

Zur Erhöhung der Homogenität der Wanddicke bei Tiefziehverfahren schlägt die internationale Anmeldung WO 2019/06448 A1 ein Tiefziehverfahren vor, in dessen Verlauf eine flache Folie mit einem Temperaturprofil beaufschlagt wird.

Mit der gleichen Zielsetzung werden in der europäischen Patentanmeldung EP2298536 A2 und der internationalen Patentanmeldung WO 2020/1520441 A1 Verfahren unter Einsatz von Heizvorrichtungen mit heterogener Temperaturverteilung vorgeschlagen.

Diese zuvor beschriebenen Lösungsansätze sind jedoch apparativ aufwändig und eignen sich nur in bedingtem Maße für hohe Durchsätze. Darüber hinaus ist die Einrichtung ebenso wie die Umstellung entsprechender Tiefziehlinien kostenträchtig.

Vor diesem technischen Hintergrund lag der Anmeldung die Aufgabe zugrunde, eine Portionseinheit bereitzustellen, welche bei minimalem apparativen Aufwand und minimalem Einsatz zur Verpackung eingesetzter Filmmaterialien eine maximale Stabilität mit ansprechender Optik und Haptik verbindet.

Ein erster Anmeldungsgegenstand ist eine Portionseinheit mit mindestens einer von einem Film umgebenden befüllten Aufnahmekammer, erhältlich durch ein Verfahren, umfassend die Schritte
a) Transport eines ersten Films in Richtung einer Heizvorrichtung;
b) In Kontakt Bringen des ersten Films mit einer Oberfläche der Heizvorrichtung;
c) Erwärmen des ersten Films mittels der Heizvorrichtung;
d) Aufheben des Kontakts zwischen dem ersten Film und der Heizvorrichtung;
e) Einformen des ersten erwärmten Films in die Kavitäten einer Tiefziehmatrize unter Ausbildung eines Aufnahmebehälters mit mindestens einer Aufnahmekammer;
f) Befüllen der mindestens einen Aufnahmekammer;
g) gegebenenfalls Verschließen und Vereinzeln der befüllten Aufnahmebehälter unter Ausbildung der Portionseinheit,
wobei der Oberflächenbereich der Heizvorrichtung, der mit dem Film in Kontakt gebracht wird, mindestens eine Vertiefung aufweist und die mindestens eine Vertiefung in Schritt b) von den Teilbereichen des ersten Films bedeckt wird, welche in Schritt e) in die Kavität der Tiefziehmatrize eingeformt werden.

Die erfindungsgemäß hergestellten Waschmittelportionseinheiten zeichnen sich aufgrund einer gleichförmigen Dicke des wasserlöslichen Films durch eine hohe mechanische Stabilität bei geringem Verpackungsmitteleinsatz und gleichzeitig vorteilhafter Haptik und Optik aus.

Die erfindungsgemäß erhältlichen Portionseinheiten werden vorzugsweise durch Umformung wasserlöslicher Filme in einer Tiefziehapparatur hergestellt.

Der wasserlösliche Film kann ein oder mehrere strukturell verschiedene wasserlösliche(s) Polymer(e) umfassen. Als wasserlösliche(s) Polymer(e) für den ersten wasserlöslichen Film eignen sich insbesondere Polymere aus der Gruppe (gegebenenfalls acetalisierter) Polyvinylalkohole (PVAL) sowie deren Copolymere.

Wasserlösliche Filme zur Herstellung der Portionseinheit basieren bevorzugt auf einem Polyvinylalkohol oder einem Polyvinylalkoholcopolymer, dessen Molekulargewicht bevorzugt im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt. Bevorzugte wasserlösliche Filme umfassen mindestens 30 Gew.-%, vorzugsweise mindestens 50 Gew.-% und insbesondere mindestens 70 Gew..% Polyvinylalkohol oder Polyvinylalkoholcopolymere.

Die Herstellung der Polyvinylalkohol und Polyvinylalkoholcopolymere schließt in der Regel die Hydrolyse intermediären Polyvinylacetats ein. Bevorzugte Polyvinylalkohole und Polyvinylalkoholcopolymere weisen einen Hydrolysegrad 70 bis 100 Mol-%, vorzugsweise 80 bis 90 Mol-%, besonders bevorzugt 81 bis 89 Mol-% und insbesondere 82 bis 88 Mol-% auf.

Bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Sulfonsäuren wie die 2-Acrylamido-2-methyl-1-propansulfonsäure (AMPS), Acrylsäure, Methacrylsäure, Acrylsäureester, Methacrylsäureester oder Mischungen daraus; unter den Estern sind C₁₋₄-Alkylester oder - Hydroxyalkylester bevorzugt. Als weitere Monomere kommen ethylenisch ungesättigte Dicarbonsäuren, beispielsweise Itaconsäure, Maleinsäure, Fumarsäure und Mischungen daraus in Betracht.

Geeignete wasserlösliche Folien zum Einsatz in den Portionseinheiten gemäß der Erfindung sind Folien, die von der Firma MonoSol LLC beispielsweise unter der Bezeichnung M8630, M8720, M8310, C8400 oder M8900 vertrieben werden. Andere geeignete Folien umfassen Folien mit der Bezeichnung Solublon^{®} PT, Solublon^{®} GA, Solublon^{®} KC oder Solublon^{®} KL von der Aicello Chemical Europe GmbH oder die Folien VF-HP von Kuraray sowie die Hi-Selon Serie der Mitsubishi Chemical Corporation.

Der erste, vorzugsweise wasserlösliche Film weist vorzugsweise eine Dicke von 10 bis 90 µm, bevorzugt von 30 bis 60 µm auf.

Die wasserlöslichen Filme können als weitere Inhaltsstoffe zusätzliche Wirk- oder Füllstoffe aber auch Weichmacher und/oder Lösungsmittel, insbesondere Wasser, enthalten.

Zur Gruppe der weiteren Wirkstoffe zählen dabei beispielsweise Materialien, welche die von dem Filmmaterial umschlossenen Inhaltsstoffe des Waschmittels vor Zersetzung oder Desaktivierung durch Lichteinstrahlung schützen. Als besonders geeignet haben sich hier Antioxidantien, UV-Absorber und Fluoreszensfarbstoffe erwiesen.

Als Weichmacher können beispielsweise Glycerin, Ethylenglycol, Diethylenglycol, Propandiol, 2-Methyl-1,3-propandiol, Sorbit oder deren Gemische eingesetzt werden.

Zur Verminderung ihrer Reibungskoeffizienten kann die Oberfläche des wasserlöslichen Films der Waschmittelportionseinheit optional mit feinem Pulver abgepudert werden. Natriumaluminosilicat, Siliciumdioxid, Talk und Amylose sind Beispiele für geeignete Pudermittel.

Der die Vertiefung umgebende Oberflächenbereich der Heizvorrichtung, mit welchem der Film in Schritt b) in Kontakt gebracht wird, ist vorzugsweise plan ausgebildet. Besonders bevorzugte Materialien zur Fertigung der Oberfläche Heizvorrichtung, mit welcher der wasserlösliche Film in Schritt b) in Kontakt steht, sind Keramik oder Metall, insbesondere Aluminium.

Bevorzugte Heizvorrichtungen weise eine metallische Oberfläche, insbesondere eine metallische Oberfläche auf, welche Aluminium umfasst. Aufgrund ihrer wärmeleitenden Eigenschaften werden metallische Heizvorrichtungsoberflächen bevorzugt, welche zu mindestens 70 Gew.-%, vorzugsweise zu mindestens 90 Gew.-%, besonders bevorzugt zu mindestens 98 Gew.-% und insbesondere vollständig aus Aluminium bestehen. Metallische Oberflächen ermöglichen insbesondere bei kurzen Kontaktzeiten eine effiziente Wärmeübertragung auf den vorzugsweise wasserlöslichen Film und beeinflussen die Eigenschaften der Portionseinheit vorteilhaft.

Die planen Oberflächenbereiche der Heizvorrichtung können zur Steuerung der Wärmeübertragung oder zur Vermeidung von Anhaftungen strukturiert sein. Derart strukturierte Oberflächen weisen beispielsweise sicht- oder spürbare Unebenheiten wie Rillen auf. Die Strukturelemente unterscheiden sich von den Vertiefungen naturgemäß in Hinblick auf ihre Tiefe und ihre Breite. In bevorzugten strukturierten Oberflächenbereichen beträgt die maximale Tiefe der Strukturelemente weniger als 0,5 mm, vorzugsweise weniger als 0,2 mm und insbesondere weniger als 0,1 mm. Die maximale Tiefe entspricht der maximalen Länge einer zur Öffnungsfläche orthogonalen Strecke zwischen einem Punkt auf der Öffnungsfläche und einem Punkt auf der Bodenfläche des Strukturelements. Wiederum sind auch die Strukturierungen geeignet, die Eigenschaften der erfindungsgemäß erhältlichen Portionseinheiten zu verbessern.

Bevorzugte Heizvorrichtungen weisen eine umlaufende Umrandung auf. Die Umrandung schließt den plan ausgebildeten Oberflächenbereich und die in diesem Oberflächenbereich ausgebildete Vertiefung oder die die in diesem Oberflächenbereich ausgebildeten Vertiefungen ein. Vorzugsweise werden von der Umrandung mindestens vier, bevorzugt mindestens acht und insbesondere mindestens sechzehn Vertiefungen umschlossen.

Mittels der Umrandung wird ein über die Heizvorrichtung verbrachter Film von der beheizten Oberfläche beabstandet. Ein Kontakt zwischen Film und Oberfläche der Heizvorrichtung tritt dadurch erst durch gezielte Krafteinwirkung, beispielsweise durch Anlegen eines Unterdrucks zwischen Heizvorrichtungsoberfläche und Film, ein. Im Ergebnis lassen sich die Kontaktzeiten zwischen der beheizten Oberfläche und dem Film auch bei hohen Verfahrensgeschwindigkeiten gezielt steuern. Da bei geringer Umrandungshöhe der beschriebene Beabstandungseffekt in geringerem Maß ausgeprägt ist, während bei hoher Umrandungshöhe die Wirkung des eingesetzten Unterdrucks vermindert wird, beträgt die Höhe der Umrandung vorzugsweise 0,5 bis 2 mm, besonders bevorzugt 0,8 bis 1,2 mm. Eine Umrandungshöhe von 1 mm wird ganz besonders bevorzugt.

Zusammenfassend sind bevorzugte Portionseinheiten durch ein Verfahren erhältlich, bei welchem der die Vertiefung umgebende Oberflächenbereich der Heizvorrichtung plan ausgebildet und von einer umlaufenden Umrandung mit einer Höhe von 0,5 bis 2 mm, vorzugweise von 0,8 bis 1,2 mm umschlossen ist.

In Bezug auf die angestrebte homogene Filmdehnung hat es sich als vorteilhaft erwiesen, wenn die Öffnungsfläche der mindestens einen Vertiefung kleiner ist als die Öffnungsfläche der Kavität. In bevorzugten Verfahren beträgt die Öffnungsfläche der mindestens einen Vertiefung 40 bis 95%, vorzugsweise 50 bis 90% und insbesondere 60 bis 80% der Öffnungsfläche der Kavität.

Für die Erzielung einer homogenen Filmdehnung in den erfindungsgemäß erhältlichen Portionseinheiten ist es weiterhin vorteilhaft, den Umriss der Öffnungsfläche der Vertiefung dem Umriss der Öffnungsfläche der Kavität nachzubilden. Als Nachbildung wird die zweidimensionale Form der Öffnungsfläche einer Vertiefung bezeichnet, welche der zweidimensionalen Form der Öffnungsfläche der Kavität beispielsweise in Bezug auf die Anzahl der vorhandenen Ecken gleicht.

Besonders bevorzugt ist es, wenn der Umriss der Öffnungsfläche der Vertiefung aus dem Umriss der Öffnungsfläche der Kavität durch eine Verkleinerung erhalten wird, wobei vorzugsweise Verkleinerungsfaktoren von 0,4 bis 0,95, bevorzugt von 0,5 bis 0,9 und insbesondere von 0,6 bis 0,8 angewendet werden.

Bevorzugte Vertiefungen weisen eine Öffnungsfläche mit einem maximalen Durchmesser von 10 bis 40 mm, vorzugsweise von 20 bis 35 mm auf. Die maximale Tiefe bevorzugter Vertiefungen beträgt 0,5 bis 7 mm, vorzugsweise von 0,8 bis 4 mm. Die maximale Tiefe entspricht der maximalen Länge einer zur Öffnungsfläche orthogonalen Strecke zwischen einem Punkt auf der Öffnungsfläche und einem Punkt auf der Bodenfläche der Vertiefung.

Die Vertiefungen können unterschiedliche Raumformen aufweisen. Bevorzugte Vertiefungen weisen neben dem Rand der Öffnungsfläche höchstens einen weiteren Rand auf. Bevorzugt ist es weiterhin, wenn die Vertiefungen keine zur Öffnungsfläche orthogonalen Seitenflächen aufweisen. Bevorzugt sind vielmehr Vertiefungen, welche ausschließlich durch ihre Öffnungsfläche und eine direkt an die Öffnungsfläche anschließende Bodenfläche begrenzt sind. Besonders bevorzugte Vertiefungen weisen beispielsweise eine halbkugelförmige, gestaucht halbkugelförmige, gestreckt halbkugelförmige oder gestaucht und gestreckt halkugelförmige Raumform auf. Die Bodenfläche kann abgeflacht sein, beispielsweise in Form eines zur Öffnungsfläche planparallelen Bereichs.

Bevorzugte Vertiefungen sind durch eine von ihrem Rand bis zu ihrem tiefsten Punkt kontinuierlich abfallende Bodenfläche gekennzeichnet. Selbstverständlich kann die Vertiefung mehr als einen tiefsten Punkt aufweisen. Beispielsweise kann die Vertiefung, wie zuvor beschrieben, eine zur Öffnungsfläche anteilsweise planparallele Bodenfläche aufweisen. In einer solchen Ausführungsform weist die Bodenfläche zwischen dem Rand der Vertiefung und dem Rand des planparallelen Bereichs der Bodenfläche ein kontinuierliches Gefälle auf.

Das Gefälle kann linear oder nichtlinear verlaufen. Sowohl das absolute Gefälle als auch dessen relativer Verlauf haben sich als relevant für die erzielte Filmdickenhomogenität erwiesen. Bevorzugte Vertiefungen weisen eine von ihrem Rand bis zu ihrem tiefsten Punkt kontinuierlich abfallende Bodenfläche auf, deren Gefälle auf der kürzesten Strecke vom Rand bis zum tiefsten Punkt zu wenigstens 10%, vorzugsweise zu 30% der Strecke linear verläuft. Als vorteilhaft haben sich beispielsweise Verfahrensvarianten unter Einsatz von Vertiefungen erwiesen, welche eine von ihrem Rand bis zu ihrem tiefsten Punkt kontinuierlich abfallende Bodenfläche aufweisen, deren Gefälle auf der kürzesten Strecke vom Rand bis zum tiefsten Punkt von 10 bis 90%, vorzugsweise von 30 bis 80% der Strecke linear verläuft.

Bevorzugt ist es, wenn die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt sich an mindestens einem Punkt ändert.

Vorzugsweise weist die Vertiefung eine von ihrem Rand bis zu ihrem tiefsten Punkt kontinuierlich abfallende Bodenfläche auf, deren Gefälle auf der kürzesten Strecke vom Rand bis zum tiefsten Punkt über die gesamte Strecke 10 bis 50%, vorzugsweise 15 bis 40% beträgt.

Die vorteilhaften Eigenschaften der erfindungsgemäß erhältlichen Portionseinheiten sind bei Einsatz von Vertiefungen mit einem Volumen von 1 bis 8 ml, vorzugweise von 1 bis 6 ml besonders ausgeprägt.

Das Verhältnis der maximalen Tiefe der Vertiefung in Schritt b) zur maximalen Tiefe der Kavität in Schritt e) beträgt vorzugsweise 2:3 bis 1 zu 5, besonders bevorzugt 1:2 bis 1:4. Ein entsprechendes Verhältnis hat sich sowohl im Hinblick auf die Homogenität der Foliendickenverteilung als auch in Bezug auf die Prozessführung als vorteilhaft erwiesen.

Das erfindungsgemäße Verfahren eignet sich insbesondere zur Herstellung von Portionseinheiten mit komplexen Geometrien oder für Portionseinheiten mit mehr als einer Aufnahmekammer. In einer bevorzugten Ausbildung des Verfahrens weist die Portionseinheit daher mindestens zwei, vorzugsweise mindestens drei und insbesondere mindestens vier Aufnahmekammern auf, wobei die Heizvorrichtung eine der Anzahl der Aufnahmekammern entsprechende Zahl an Vertiefungen aufweist, die in Schritt b) von den Teilbereichen des ersten Films bedeckt werden, welche in Schritt e) in die Kavität der Tiefziehmatrize unter Ausbildung der mindestens zwei, vorzugsweise mindestens drei und insbesondere mindestens vier Aufnahmekammern eingeformt werden.

Werden Portionseinheiten mit zwei oder mehr Aufnahmekammern hergestellt, so können sich die Aufnahmekammern im Hinblick auf ihre Raumform oder ihre Abmessungen identisch sein, können sich jedoch auch unterscheiden. Die Vorzüge des erfindungsgemäßen Verfahrens in Bezug auf die Erzielung homogener Foliendickenverteilungen werden insbesondere auch bei der Herstellung von Portionseinheiten offenkundig, welche mindestens zwei Vertiefungen aufweisen, die sich hinsichtlich ihrer maximalen Tiefe unterscheiden.

Zwischen zwei benachbarten, einer Portionseinheit zugehörigen Vertiefungen ist die Oberfläche der Heizvorrichtung vorzugsweise plan ausgebildet. Der minimale Abstand zwischen zwei derartigen benachbarten Vertiefungen beträgt vorzugsweise 0,5 bis 4 mm vorzugsweise 1 bis 3 mm.

In einer bevorzugten Ausführungsform sind die zwei, drei oder vier Aufnahmekammern und folglich auch die den Aufnahmekammern zugeordneten Vertiefungen einander wenigstens anteilsweise umschließend angeordnet. Diese Verfahrensweise wird beispielsweise bei der Herstellung von Portionseinheiten mit mindestens zwei, vorzugsweise mindestens drei und insbesondere mindestens vier Aufnahmekammern realisiert, deren eine Kammer einen Mittelpunkt bildet, um den die verbleibenden Kammern rotationssymmetrisch angeordnet sind.

Wie eingangs ausgeführt, weist die Heizvorrichtung vorzugsweise eine metallische Oberfläche auf. Diese vorzugsweise metallische Oberfläche weist wiederum Vertiefungen auf, welche bei minimalem apparativem Aufwand und minimalem Einsatz zur Verpackung eingesetzter Filmmaterialien die effiziente Herstellung von Portionseinheiten mit maximaler Stabilität und ansprechender Optik und Haptik ermöglichen.

Diese vorteilhaften Eigenschaften des erfindungsgemäßen Verfahrens lassen sich durch eine wenigstens anteilsweise Beschichtung der Oberfläche der Heizvorrichtung verstärken. Besonders vorteilhaft ist es dabei, die Oberfläche der Heizvorrichtung im Bereich der Vertiefung wenigstens anteilsweise beschichtet ist. Eine entsprechende Beschichtung beeinflusst, wie die in der Oberfläche befindlichen Vertiefungen, die Filmdickenverteilung der hergestellten Aufnahmebehälter. Als vorteilhaft hat es sich in diesem Zusammenhang erweisen, die Oberfläche der Heizvorrichtung im Bereich der Vertiefung(en) vollflächig zu beschichten.

Die Beschichtung kann sich auf die Oberfläche der Heizvorrichtung im Bereich der Vertiefung(en) und den die Vertiefung umgebenden Randbereich erstrecken.

Die Beschichtung der Heizvorrichtungsoberfläche im Bereich der Vertiefungen führt notwendigerweise zu einer wenigstens anteilsweisen Befüllung des Vertiefungsvolumens. In Varianten des erfindungsgemäßen Verfahrens ist die mindestens eine Vertiefung zu mindestens 60 Vol.-%, vorzugsweise zu mindestens 80 Vol.-% und insbesondere vollständig mit einem Beschichtungsmaterial verfüllt.

Die Beschichtung kann 5 bis 80 %, vorzugsweise 10 bis 70% und insbesondere 20 bis 50% des Oberflächenbereichs der Heizvorrichtung, welcher in Schritt b) mit dem Film in Kontakt gebracht wird, bedecken.

Als Material für die Beschichtung eignen sich Beschichtungsmaterialien aus der Gruppe der Metalle und der Polymere, insbesondere der Gummis und der Silikone. Die Beschichtung mit Silikonen ist aufgrund ihrer Wärmebeständigkeit und Formbarkeit besonders bevorzugt.

Bevorzugte Beschichtungsmittel weisen eine geringere Wärmeleitfähigkeit und/oder einen geringeren Wärmeübergangskoeffizienten auf als die Heizvorrichtungsoberfläche.

Die Dicke der Beschichtung beträgt vorzugsweise 100 bis 4000µm, besonders bevorzugt 200 bis 2000 µm.

Etwaige Beschichtungen können mit der Grundfläche in unterschiedlicher Weise verbunden werden. So eignen sich Haftverbindungen zur Ausbildung einer anhaltenden und zeitlich ortsstabilen Bindung zwischen der Heizvorrichtungsoberfläche und dem Beschichtungsmittel. Klemm- oder Steckverbindungen werden wiederum vorzugsweise in den Fällen eingesetzt, in denen eine schnelle Austauschbarkeit der Beschichtungsmittel, beispielsweise aufgrund von Verschleiß oder zur Änderung der Verfahrensparameter angestrebt wird.

Für die Foliendickenverteilung des Verfahrensproduktes hat es sich als vorteilhaft erwiesen, wenn die Beschichtung in Schritt b) mit dem Oberflächenanteil des wasserlöslichen Films in Kontakt steht, welcher in Schritt e) in die Kavität der Tiefziehmulde eingeformt wird.

In einer bevorzugten Verfahrensvariante wird der erste Film in Schritt b) nur an einer Seite mit der Heizvorrichtung in Kontakt gebracht. Im Vergleich zu Verfahren unter Einsatz von zwei Heizvorrichtungen ist das erfindungsgemäße Verfahren damit nicht nur mit einem geringeren apparativen Aufwand verbunden, es ermöglicht zudem ein kompakteres Design der Produktionsstraße.

Bevorzugt wird in Schritt b) die Oberseite des Films mit der Heizvorrichtung in Kontakt gebracht. Als Oberseite wird dabei die räumlich noch oben orientierte Seite des Films bezeichnet. Hierzu wird die Heizvorrichtung in Schritt b) vorzugsweise in Richtung des Films abgesenkt.

Zur Verringerung der Prozessdauer und zur Sicherstellung eines reproduzierbaren Kontakts zwischen dem ersten wasserlöslichen Film und der Oberfläche der Heizvorrichtung wird der Film in Schritt b) mittels eines Unterdrucks mit der Heizvorrichtung in Kontakt gebracht. Weiterhin ist es bevorzugt, den Kontakt zwischen dem Film und der Heizvorrichtung durch Beibehaltung eines Unterdrucks aufrecht zu erhalten. Die Höhe eines entsprechenden Unterdrucks, welcher in Schritt b) zwischen Heizvorrichtung und Film aufgebaut wird, beträgt vorzugsweise 200 bis 800 mbar und insbesondere 400 bis 700 mbar.

Zur Unterstützung der gleichmäßigen Ausbildung eines Unterdrucks zwischen Heizvorrichtung und wasserlöslichem Film weist die Oberfläche der Heizvorrichtung vorzugsweise Bohrungen auf, mittels derer zwischen Heizvorrichtung und Film befindliches Gas abgeführt werden kann. Diese Bohrungen befinden sich vorzugsweise zu 60%, bevorzugt zu 90%, insbesondere zu 95% und ganz besonders bevorzugt vollständig außerhalb der Vertiefungen.

In Schritt c) wird der Film vorzugsweise für einen Zeitraum von 0,5 bis 7 Sekunden, bevorzugt von 1 bis 6 Sekunden und insbesondere von 2 bis 5 Sekunden erwärmt.

Die metallische Oberfläche der Heizvorrichtung weist vorzugswese eine Temperatur im Bereich von 23 bis 150°C, vorzugsweise von 80 bis 135°C auf. Besonders bevorzugt ist es, wenn die Oberfläche der Heizvorrichtung im Bereich der Erhebung(en) mit welchen der wasserlösliche Film in Schritt b) in Kontakt steht, eine Temperatur im Bereich von 90 bis 150°C, vorzugsweise von 110 bis 135°C aufweist.

Zur weiteren Angleichung der Dehnfaktoren der unterschiedlichen Abschnitte des den Aufnahmebehälter ausbildenden wasserlöslichen Films hat es sich weiterhin als vorteilhaft erwiesen, wenn die mindestens eine Erhebung in Schritt c) mit jedem Flächenabschnitten des wasserlöslichen Films in Berührung steht, welche den Randbereich der Aufnahmekammer(n) des Aufnahmebehälters bilden. Aus den gleichen Gründen ist es bevorzugt, dass die Flächenabschnitte des wasserlöslichen Films, welche den Bodenbereich der Aufnahmekammer(n) des Aufnahmebehälters bilden, in Schritt c) nicht mit der Heizvorrichtung in Berührung stehen.

Zur Steigerung der Verfahrenseffizienz und zur Steigerung der Filmdickenhomogenität im Rahmen des erfindungsgemäßen Verfahrens hat es sich als vorteilhaft erwiesen, wenn sich der Film in Schritt c) zwischen der Heizvorrichtung und der in Schritt e) eingesetzten Tiefziehmatrize befindet, wobei der Abstand zwischen der Oberfläche der Heizvorrichtung und der Tiefziehmatrize vorzugsweise weniger als 10 mm, bevorzugt weniger als 5 mm, insbesondere 0,1 bis 2 mm und besonders bevorzugt 0,2 bis 1 mm beträgt.

In Schritt d) wird der Kontakt zwischen dem ersten wasserlöslichen Film und der Oberfläche der Heizvorrichtung aufgehoben. Hierzu wird der gegebenenfalls zwischen der Heizvorrichtung und dem Film wirkende Unterdruck beseitigt. In einer besonders bevorzugten Ausführungsform des Verfahrens wird in Schritt d) ein zuvor zwischen der Heizvorrichtung und dem Film erzeugter Unterdruck beseitigt und zeitgleich oder nachfolgend die Heizvorrichtung angehoben.

Der Film weist zu Beginn von Schritt e) vorzugsweise eine Temperatur oberhalb seiner Glasübergangstemperatur auf.

In Schritt e) wird der Film in die Kavität einer Tiefziehmatrize eingeformt. Hierzu wird vorzugsweise für die Dauer von 0,5 bis 7 Sekunden bevorzugt von 1 bis 5 Sekunden ein Unterdruck zwischen dem Film und der Tiefziehmatrize aufgebaut. Dieser zwischen dem Film und der Tiefziehmatrize erzeugte Unterdruck beträgt vorzugsweise 100 bis 600 mbar und insbesondere 200 bis 400 mbar.

Bei der Einformung in die Kavität der Tiefziehmatrize wird die Oberfläche des wasserlöslichen Films vorzugsweis um mindestens 80%, vorzugsweise um mindestens 120%, insbesondere um 120 bis 300% besonders bevorzugt um 180 bis 260% vergrößert. Entsprechend weist der Film im Anschluss an den Schritt e) einen Gesamtstreckfaktor von vorzugsweise mindestens 1,2, bevorzugt von 1,2 bis 3,0 und insbesonere von 1,8 bis 2,6 auf. Gleichzeitig beträgt der maximale lokale Streckfaktor des wasserlöslichen Films im Anschluss an Schritt e) vorzugsweise 1,8 bis 4, besonders bevorzugt von 2 bis 2,8.

Bevorzugt ist es insbesondere, wenn der wasserlösliche Film in Schritt e) unter Ausbildung eines Aufnahmebehälters mit mindestens zwei, vorzugsweise mindestens drei und insbesondere mindestens vier Aufnahmekammern eingeformt wird.

Die in Schritt e) gebildete(n) Aufnahmekammer(n) in Schritt e) weisen vorzugsweise ein Füllvolumen von 2 bis 8 ml, besonders bevorzugt von 3 bis 7 ml auf. Das Füllvolumen des Aufnahmebehälter in Schritt e) beträgt vorzugsweise 2 bis 50 ml, bevorzugt 10 bis 40 ml und insbesondere 13 bis 25 ml.

In bevorzugten Verfahrensvarianten, bei denen der Aufnahmebehälter mindestens zwei, vorzugsweise mindestens drei und insbesondere mindestens vier Aufnahmekammern aufweist, beträgt das Verhältnis des Volumens der größten Aufnahmekammer zum Volumen der kleinsten Aufnahmekammer 4:1 bis 1:1, vorzugsweise 3:1 bis 1:1.

Aus Gründen der Prozesseffizienz ist das erfindungsgemäße Verfahren derart ausgestaltet, dass in einem Verfahrensdurchlauf nicht lediglich eine einzige Waschmittelportionseinheit, sondern parallel eine Mehrzahl von Waschmittelportionseinheiten hergestellt wird. Vorzugsweise wird in Schritt e) ein Flächengebilde mit mindestens 14, vorzugsweise mindestens 20 Aufnahmebehältern ausgebildet.

In diesem Flächengebilde sind die Aufnahmebehälter vorzugsweise in Reihen angeordnet. Im Hinblick auf die nachfolgende Befüllung sind die in Schritt e) ausgebildeten Flächengebilde vorzugsweise in Reihen angeordnet, welche orthogonal zur Transportrichtung des wasserlöslichen Films angeordnet sind.

In einer alternativen Ausführungsform wird in Schritt e) ein Flächengebilde ausgebildet, in welchem die Aufnahmebehälter in Reihen angeordnet sind, welche orthogonal zur Transportrichtung des wasserlöslichen Films verlaufen und zueinander jeweils um ein Drittel der Breite eines Aufnahmebehälters, vorzugsweise um die Hälfte der Breite eines Aufnahmebehälters versetzt sind.

In dem Flächengebilde sind die Aufnahmebehälter vorzugsweise derart angeordnet, dass jeder Aufnahmebehälter mindestens einem Zwischenbereich benachbart ist, welcher seinerseits von drei Aufnahmebehältern umgeben ist.

Die mindestens eine Aufnahmekammer des Aufnahmebehälters wird in Schritt f) befüllt. Zur Befüllung eignen sich feste und flüssige Wasch- oder Reinigungsmittel.

Insbesondere in Fällen, in denen die eingefüllten Wasch- oder Reinigungsmittel nicht haftend mit dem wasserlöslichen Filmmaterial verbunden sind, wie dies beispielsweise bei Schmelzen der Fall sein kann, wird die befüllte Aufnahmekammer des Aufnahmebehälters verschlossen. Entsprechende Verfahren, in deren Verlauf die Aufnahmekammer des Aufnahmebehälters in einem weiteren Schritt f) befüllt und die befüllte Aufnahmekammer in einem nachfolgenden Schritt g) mittels eines zweiten wasserlöslichen Films verschlossen wird, sind im Hinblick auf die Produktästhetik und -handhabbarkeit bevorzugt.

Durch diese Anmeldung werden u.a. die folgenden Gegenstände bereitgestellt:
1. Portionseinheit mit mindestens einer von einem Film umgebenden befüllten Aufnahmekammer, erhältlich durch ein Verfahren, umfassend die Schritte
   a) Transport eines ersten Films in Richtung einer Heizvorrichtung;
   b) In Kontakt Bringen des ersten Films mit einer Oberfläche der Heizvorrichtung;
   c) Erwärmen des ersten Films mittels der Heizvorrichtung;
   d) Aufheben des Kontakts zwischen dem ersten Film und der Heizvorrichtung;
   e) Einformen des ersten erwärmten Films in die Kavitäten einer Tiefziehmatrize unter Ausbildung eines Aufnahmebehälters mit mindestens einer Aufnahmekammer;
   f) Befüllen der mindestens einen Aufnahmekammer;
   g) gegebenenfalls Verschließen und Vereinzeln der befüllten Aufnahmebehälter unter Ausbildung der Portionseinheit,
   wobei der Oberflächenbereich der Heizvorrichtung, der mit dem Film in Kontakt gebracht wird, mindestens eine Vertiefung aufweist und die mindestens eine Vertiefung in Schritt b) von den Teilbereichen des ersten Films bedeckt wird, welche in Schritt e) in die Kavität der Tiefziehmatrize eingeformt werden.
2. Portionseinheit nach Punkt 1, wobei der die Vertiefung umgebende Oberflächenbereich der Heizvorrichtung plan ausgebildet ist.
3. Portionseinheit nach einem der vorherigen Punkte, wobei der die Vertiefung umgebende Oberflächenbereich der Heizvorrichtung plan ausgebildet ist und eine strukturierte Oberfläche aufweist, (strukturierte Oberfläche = sicht- oder spürbare Unebenheiten wie Rillen)
4. Portionseinheit nach einem der vorherigen Punkte, wobei der die Vertiefung umgebende Oberflächenbereich der Heizvorrichtung plan ausgebildet ist, welcher von einer umlaufenden Umrandung mit einer Höhe von 0,5 bis 2 mm, vorzugweise von 0,8 bis 1,2 mm umschlossen ist,
5. Portionseinheit nach einem der vorherigen Punkte, wobei die Öffnungsfläche der mindestens einen Vertiefung kleiner ist als die Öffnungsfläche der Kavität.
6. Portionseinheit nach einem der vorherigen Punkte, wobei die Öffnungsfläche der mindestens einen Vertiefung 40 bis 95%, vorzugsweise 50 bis 90% und insbesondere 60 bis 80% der Öffnungsfläche der Kavität beträgt.
7. Portionseinheit nach einem der vorherigen Punkte, wobei der Umriss der Öffnungsfläche der Vertiefung dem Umriss der Öffnungsfläche der Kavität nachgebildet ist.
8. Portionseinheit nach einem der vorherigen Punkte, wobei der Umriss der Öffnungsfläche der Vertiefung aus dem Umriss der Öffnungsfläche der Kavität durch einen Verkleinerungsfaktor von 0,4 bis 0,95, vorzugsweise von 0,5 bis 0,9 und insbesondere von 0,6 bis 0,8 erhalten wird.
9. Portionseinheit nach einem der vorherigen Punkte, wobei die Vertiefung eine Öffnungsfläche mit einem maximalen Durchmesser von 10 bis 40 mm, vorzugsweise von 20 bis 35 mm aufweist.
10. Portionseinheit nach einem der vorherigen Punkte, wobei die Vertiefung eine maximale Tiefe (gemessen als orthogonaler Abstand zwischen der Öffnungsfläche und der Bodenfläche der Vertiefung) von 0,5 bis 7 mm, vorzugsweise von 0,8 bis 4 mm aufweist.
11.Portionseinheit nach einem der vorherigen Punkte, wobei die Vertiefung eine halbkugelförmige, gestaucht halbkugelförmige, gestreckt halbkugelförmige oder gestaucht und gestreckt halkugelförmige Raumform aufweist.
12.Portionseinheit nach einem der vorherigen Punkte, wobei die Bodenfläche der Vertiefung abgeflacht ist und vorzugsweise planparallel zur Öffnungsfläche verläuft.
13.Portionseinheit nach einem der vorherigen Punkte, wobei die Vertiefung eine von ihrem Rand bis zu ihrem tiefsten Punkt kontinuierlich abfallende Bodenfläche aufweist.
14. Portionseinheit nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt zu wenigstens 10%, vorzugsweise zu 30% der Strecke linear verläuft.
15. Portionseinheit nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt von 10 bis 90%, vorzugsweise von 30 bis 80% der Strecke linear verläuft.
16. Portionseinheit nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt sich an mindestens einem Punkt ändert.
17. Portionseinheit nach einem der vorherigen Punkte, wobei die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt über die gesamte Strecke 10 bis 50%, vorzugsweise 15 bis 40% beträgt.
18. Portionseinheit nach einem der vorherigen Punkte, wobei die Vertiefung ein Volumen von 1 bis 8 ml, vorzugweise von 1 bis 6 ml aufweist.
19. Portionseinheit nach einem der vorherigen Punkte, wobei die Portionseinheit mindestens zwei, vorzugsweise mindestens drei und insbesondere mindestens vier Aufnahmekammern aufweist, wobei die Heizvorrichtung eine der Anzahl der Aufnahmekammern entsprechende Zahl an Vertiefungen aufweist, die in Schritt b) von den Teilbereichen des ersten Films bedeckt werden, welche in Schritt e) in die Kavität der Tiefziehmatrize unter Ausbildung der mindestens zwei, vorzugsweise mindestens drei und insbesondere mindestens vier Aufnahmekammern eingeformt werden.
20. Portionseinheit nach Punkt 19, wobei sich mindestens zwei der Vertiefungen hinsichtlich ihrer maximalen Tiefe unterscheiden.
21. Portionseinheit nach Punkt 20, wobei die Heizvorrichtung zwischen den Vertiefungen plan ausgebildet ist.
22.Portionseinheit nach einem der Punkte 19 bis 21, wobei die Heizvorrichtung zwischen den Vertiefungen plan ausgebildet ist und der minimale Abstand zwischen zwei Vertiefungen 0,5 bis 4 mm vorzugsweise 1 bis 3 mm beträgt.
23. Portionseinheit nach einem der Punkte 19 bis 22, wobei die mindestens zwei, vorzugsweise mindestens drei und insbesondere mindestens vier Aufnahmekammern einander wenigstens anteilsweise umschließen.
24. Portionseinheit nach Punkt 19 bis 23, wobei die Portionseinheit mindestens zwei, vorzugsweise mindestens drei und insbesondere mindestens vier Aufnahmekammern aufweist, welche rotationssymmetrisch um einen gemeinsamen Mittelpunkt angeordnet sind.
25. Portionseinheit nach einem der vorherigen Punkte, wobei der Film eine Dicke von 10 bis 90 µm, vorzugsweise von 30 bis 60 µm aufweist.
26. Portionseinheit nach einem der vorherigen Punkte, wobei der Film ausgewählt ist aus der Gruppe der wasserlöslichen Filme.
27. Portionseinheit nach einem der vorherigen Punkte, wobei der Film ausgewählt ist aus der Gruppe der wasserlöslichen Filme Polyvinylalkohol oder Polyvinylalkoholcopolymere umfasst.
28. Portionseinheit nach einem der vorherigen Punkte, wobei der Film ausgewählt ist aus der Gruppe der wasserlöslichen Filme und mindestens 30 Gew.-%, vorzugsweise mindestens 50 Gew.-% und insbesondere mindestens 70 Gew..% Polyvinylalkohol oder Polyvinylalkoholcopolymere umfasst.
29. Portionseinheit nach einem der vorherigen Punkte, wobei die Heizvorrichtung eine metallische Oberfläche aufweist.
30. Portionseinheit nach einem der vorherigen Punkte, wobei die Heizvorrichtung eine metallische Oberfläche aufweist, welche Aluminium umfasst.
31. Portionseinheit nach einem der vorherigen Punkte, wobei die Heizvorrichtung eine metallische Oberfläche aufweist, welche zu mindestens 70 Gew.-%, vorzugsweise zu mindestens 90 Gew.-%, besonders bevorzugt zu mindestens 98 Gew.-% und insbesondere vollständig aus Aluminium besteht.
32. Portionseinheit nach einem der vorherigen Punkte, wobei die Oberfläche der Heizvorrichtung wenigstens anteilsweise beschichtet ist.
33. Portionseinheit nach einem der vorherigen Punkte, wobei die Oberfläche der Heizvorrichtung wenigstens anteilsweise beschichtet ist.
34. Portionseinheit nach einem der vorherigen Punkte, wobei die Oberfläche der Heizvorrichtung im Bereich der Vertiefung wenigstens anteilsweise beschichtet ist.
35. Portionseinheit nach einem der vorherigen Punkte, wobei die Oberfläche der Heizvorrichtung im Bereich der Vertiefung(en) vollflächig beschichtet ist.
36. Portionseinheit nach einem der vorherigen Punkte, wobei die Oberfläche der Heizvorrichtung im Bereich der Vertiefung(en) als auch im Bereich des die Vertiefung umgebenden Randbereichs beschichtet ist.
37.Portionseinheit nach einem der vorherigen Punkte, wobei die mindestens eine Vertiefung zu mindestens 60 Vol.-%, vorzugsweise zu mindestens 80 Vol.-% und insbesondere vollständig mit dem Beschichtungsmaterial verfüllt ist.
38. Portionseinheit nach einem der vorherigen Punkte, wobei die Oberfläche der Heizvorrichtung wenigstens anteilsweise beschichtet ist und die Beschichtung 5 bis 80 %, vorzugsweise 10 bis 70% und insbesondere 20 bis 50% des Oberflächenbereichs der Heizvorrichtung, welcher mit dem Film in Kontakt gebracht wird, bedeckt.
39. Portionseinheit nach einem der Punkte 32 bis 38, wobei das Beschichtungsmaterial ausgewählt ist aus der Gruppe der Metalle.
40. Portionseinheit nach einem der Punkte 32 bis 38, wobei das Beschichtungsmaterial ausgewählt ist aus der Gruppe der Polymere.
41. Portionseinheit nach einem der Punkte 32 bis 38, wobei das Beschichtungsmaterial ausgewählt ist aus der Gruppe der Silikone.
42. Portionseinheit nach einem der Punkte 32 bis 38, wobei das Beschichtungsmaterial ausgewählt ist aus der Gruppe der Gummis.
43. Portionseinheit nach einem der Punkte 32 bis 42, wobei die Beschichtung eine Dicke von 100 bis 4000µm, vorzugsweise von 200 bis 2000 µm aufweist.
44. Portionseinheit nach einem der Punkte 32 bis 43, wobei die Beschichtung eine geringe Wärmeleitfähigkeit aufweist als die metallische Grundfläche.
45. Portionseinheit nach einem der Punkte 32 bis 44, wobei die Beschichtung einen geringen Wärmeübergangskoeffizienten aufweist als die metallische Grundfläche.
46. Portionseinheit nach einem der Punkte 32 bis 45, wobei die Beschichtung mit der Grundfläche mittels einer Haftverbindung verbunden ist.
47. Portionseinheit nach einem der der Punkte 32 bis 46, wobei die Beschichtung mit der Grundfläche mittels einer Klemmverbindung verbunden ist.
48. Portionseinheit nach einem der vorherigen Punkte 32 bis 47, wobei die Beschichtung mit der Grundfläche mittels einer Steckverbindung verbunden ist.
49. Portionseinheit nach einem der Punkte 32 bis 48, wobei die Beschichtung in Schritt b) mit dem Oberflächenanteil des wasserlöslichen Films in Kontakt steht, welcher in Schritt e) in die Kavität der Tiefziehmulde eingeformt wird.
50. Portionseinheit nach einem der vorherigen Ansprüche, wobei der erste wasserlösliche Film in Schritt b) nur an einer Seite mit der Heizvorrichtung in Kontakt gebracht wird.
51. Portionseinheit nach einem der vorherigen Ansprüche, wobei in Schritt b) die Oberseite des wasserlöslichen Films mit der Heizvorrichtung in Kontakt gebracht wird.
52. Portionseinheit nach einem der vorherigen Ansprüche, wobei in Schritt b) die Heizvorrichtung in Richtung des wasserlöslichen Films abgesenkt wird.
53. Portionseinheit nach einem der vorherigen Ansprüche, wobei die Oberfläche der Heizvorrichtung Bohrungen aufweist, mittels derer zwischen Heizvorrichtung und Film befindliches Gas abgeführt werden kann.
54. Portionseinheit nach Punkt 50, wobei sich die Bohrungen zu 60%, vorzugsweise zu 90%, insbesondere zu 95% und ganz besonders bevorzugt vollständig außerhalb der Vertiefungen befinden.
55. Portionseinheit nach einem der vorherigen Punkte, wobei in Schritt b) der wasserlösliche Film durch Einwirkung eines Unterdrucks mit der Heizvorrichtung in Kontakt gebracht wird.
56. Portionseinheit nach einem der vorherigen Punkte, wobei in Schritt b) der wasserlösliche Film durch Einwirkung eines Unterdrucks mit der Heizvorrichtung in Kontakt gehalten wird.
57. Portionseinheit nach einem der Punkte 56 oder 56, wobei in Schritt b) zwischen Heizvorrichtung und wasserlöslichem Film ein Druck von 200 bis 800 mBar, vorzugsweise von 400 bis 700 mBar aufgebaut wird.
58. Portionseinheit nach einem der vorherigen Punkte, wobei der wasserlösliche Film in Schritt c) über einen Zeitraum von 0,5 bis 7 Sekunden, vorzugsweise von 1 bis 6 Sekunden und insbesondere von 2 bis 5 Sekunden erwärmt wird.
59. Portionseinheit nach einem der vorherigen Punkte, wobei sich der wasserlösliche Film in Schritt c) unterhalb der Heizvorrichtung und oberhalb der in Schritt e) eingesetzten Tiefziehmatrize befindet.
60. Portionseinheit nach einem der vorherigen Punkte, wobei sich der wasserlösliche Film in Schritt c) unterhalb der Heizvorrichtung und oberhalb der in Schritt e) eingesetzten Tiefziehmatrize befindet und der Abstand zwischen der Oberfläche der Heizvorrichtung und der Oberfläche der Tiefziehmatrize weniger als 10 mm, vorzugsweise weniger als 5 mm und insbesondere zwischen 0,1 und 2 mm, besonders bevorzugt zwischen 0,2 und 1 mm beträgt.
61. Portionseinheit nach einem der vorherigen Punkte, wobei in Schritt d) der Unterdruck zwischen der Heizvorrichtung und dem wasserlöslichen Film aufgehoben wird.
62. Portionseinheit nach einem der vorherigen Punkte, wobei in Schritt d) der Unterdruck zwischen der Heizvorrichtung und dem wasserlöslichen Film aufgehoben wird und zeitgleich oder nachfolgend die Heizvorrichtung angehoben wird.
63. Portionseinheit nach einem der vorherigen Punkte, wobei in Schritt d) für eine Dauer von 0,5 bis 7 Sekunden vorzugsweise von 1 bis 5 Sekunden ein Unterdruck zwischen dem wasserlöslichen Film und der Tiefziehmatrize aufgebaut wird.
64. Portionseinheit nach einem der vorherigen Punkte, wobei in Schritt d) zwischen dem wasserlöslichen Film und der Tiefziehmatrize ein Druck von 100 bis 600 mBar, vorzugsweise von 200 bis 400 mBar aufgebaut wird.
65. Portionseinheit nach einem der vorherigen Punkte, wobei der wasserlösliche Film in Schritt e) unter Ausbildung eines Aufnahmebehälters mit mindestens zwei, vorzugsweise mindestens drei und insbesondere mindestens vier Aufnahmekammern eingeformt wird.
66. Portionseinheit nach einem der vorherigen Punkte, wobei der Aufnahmebehälter in Schritt e) ein Füllvolumen von 2 bis 50 ml, vorzugsweise von 10 bis 40 ml und insbesondere von 13 bis 25 ml aufweist.
67. Portionseinheit nach einem der vorherigen Punkte, wobei die Aufnahmekammer(n) in Schritt e) ein Füllvolumen von 2 bis 8 ml, vorzugsweise von 3 bis 7 ml aufweist (aufweisen).
68. Portionseinheit nach einem der vorherigen Punkte, wobei der Aufnahmebehälter mindestens zwei, vorzugsweise mindestens drei und insbesondere mindestens vier Aufnahmekammern aufweist und das Verhältnis des Volumens der größten Aufnahmekammer zum Volumen der kleinsten Aufnahmekammer 4:1 bis 1:1, vorzugsweise 3:1 bis 1:1 beträgt.
69. Portionseinheit nach einem der vorherigen Punkte, wobei in Schritt e) die Oberfläche des wasserlöslichen Films um mindestens 80%, vorzugsweise um mindestens 120%, insbesondere um 120 bis 300%, besonders bevorzugt um 180 bis 260% vergrößert wird.
70. Portionseinheit n nach einem der vorherigen Punkte, wobei der wasserlösliche Film im Anschluss an den Schritt e) einen Gesamtstreckfaktor von 1,8 bis 2,6 aufweist.
71. Portionseinheit n nach einem der vorherigen Punkte, wobei der wasserlösliche Film im Anschluss an den Schritt e) einen maximalen lokalen Streckfaktor von 1,8 bis 4, vorzugsweise von 2 bis 2,8 aufweist.
72. Portionseinheit nach einem der vorherigen Punkte, wobei die metallische Oberfläche der Heizvorrichtung eine Temperatur im Bereich von 23 bis 150°C, vorzugsweise von 80 bis 135°C aufweist.
73. Portionseinheit nach einem der vorherigen Punkte, wobei in Schritt e) ein Flächengebilde mit mindestens 14, vorzugsweise mindestens 20 Aufnahmebehältern ausgebildet wird.
74. Portionseinheit nach einem der vorherigen Punkte, wobei in Schritt e) ein Flächengebilde ausgebildet wird, in welchem die Aufnahmebehälter in Reihen angeordnet sind.
75. Portionseinheit nach einem der vorherigen Punkte, wobei in Schritt e) ein Flächengebilde ausgebildet wird, in welchem die Aufnahmebehälter in Reihen angeordnet sind, welche orthogonal zur Transportrichtung des wasserlöslichen Films verlaufen.
76.Portionseinheit nach einem der vorherigen Punkte, wobei in Schritt e) ein Flächengebilde ausgebildet wird, in welchem die Aufnahmebehälter in Reihen angeordnet sind, welche orthogonal zur Transportrichtung des wasserlöslichen Films verlaufen und zueinander jeweils um ein Drittel der Breite eines Aufnahmebehälters, vorzugsweise um die Hälfte der Breite eines Aufnahmebehälters versetzt sind.
77. Portionseinheit nach einem der vorherigen Punkte, wobei in Schritt e) ein Flächengebilde ausgebildet wird, in welchem jeder Aufnahmebehälter mindestens einem Zwischenbereich benachbart ist, welcher seinerseits von drei Aufnahmebehältern umgeben ist.
78. Portionseinheit nach einem der vorherigen Punkte, wobei die mindestens eine Aufnahmekammer des Aufnahmebehälters in einem weiteren Schritt f) mit einem Wasch- oder Reinigungsmittel befüllt werden.
79. Portionseinheit nach einem der vorherigen Punkte, wobei die mindestens eine Aufnahmekammer des Aufnahmebehälters in einem weiteren Schritt f) befüllt und die befüllte Aufnahmekammer in einem nachfolgenden Schritt g) mittels eines zweiten Films, vorzugsweise mittels eines wasserlöslichen Films verschlossen wird.

### Beispiele

Ein wasserlöslicher Polyvinylalkoholfilm (Dicke 88µm) wurde mittels variierender Heizvorrichtungen erwärmt und nachfolgend durch Einwirkung eines Unterdrucks zu einer tropfenförmigen Aufnahmekammer umgeformt. Die Temperatur der Heizplatte betrug jeweils 120°C. Mit Ausnahme der eingesetzten Heizvorrichtung waren die in den Versuchen eingesetzten Verfahrensparameter identisch.

Die folgenden beiden Heizvorrichtungen wurden eingesetzt:
Heizvorrichtung 1: vollständig plane Heizplatte (Aluminium)
Heizvorrichtung 2: Heizplatte (Aluminium) mit einer Vertiefung (maximale Tiefe 1mm) deren Umriss der tropfenförmigen Aufnahmekammer mit einem Verkleinerungsfaktor von 0,8 nachempfunden ist

Im Anschluss an den Tiefziehprozess wurde die Filmdicke in den Aufnahmekammern durch optische Verfahren (Film Thickness Analyzer) entlang eines zur Längsachse des Tropfens orthogonalen Querschnitts ermittelt. Die Messung der Filmdicke erfolgte entlang des Querschnitts an jeweils neun äquidistant voneinander entfernten Messpunkten.

### Filmdicke ([µm])

| | 1 | 2 | 3 | 4 | 5 | 6 | 7 | 8 | 9 |
|---|---|---|---|---|---|---|---|---|---|
| Heizvorrichtung 1 | 34,6 | 29,6 | 27,1 | 24,4 | 25,9 | 24,7 | 24,1 | 27,1 | 33,3 |
| Heizvorrichtung 2 | 36,6 | 34,1 | 32,0 | 35,0 | 35,0 | 34,6 | 25,9 | 33,7 | 43,8 |

Die mittels der mit Vertiefungen versehenen Heizplatte erhaltenen Aufnahmekammern zeichnen sich bei identischen Ausgangsfilm durch eine höhere Filmdicke aus. Portionseinheiten, welche durch die Befüllung mit einem Flüssigwaschmittel und nachfolgende Versiegelung mittels eines zweiten wasserlöslichen Films erhalten wurden, wiesen eine verbesserte mechanische Stabilität auf.

## Patentansprüche

1. Portionseinheit mit mindestens einer von einem Film umgebenden befüllten Aufnahmekammer, erhältlich durch ein Verfahren, umfassend die Schritte
a) Transport eines ersten Films in Richtung einer Heizvorrichtung;
b) In Kontakt Bringen des ersten Films mit einer Oberfläche der Heizvorrichtung;
c) Erwärmen des ersten Films mittels der Heizvorrichtung;
d) Aufheben des Kontakts zwischen dem ersten Film und der Heizvorrichtung;
e) Einformen des ersten erwärmten Films in die Kavitäten einer Tiefziehmatrize unter Ausbildung eines Aufnahmebehälters mit mindestens einer Aufnahmekammer;
f) Befüllen der mindestens einen Aufnahmekammer;
g) gegebenenfalls Verschließen und Vereinzeln der befüllten Aufnahmebehälter unter Ausbildung der Portionseinheit,
wobei der Oberflächenbereich der Heizvorrichtung, der mit dem Film in Kontakt gebracht wird, mindestens eine Vertiefung aufweist und die mindestens eine Vertiefung in Schritt b) von den Teilbereichen des ersten Films bedeckt wird, welche in Schritt e) in die Kavität der Tiefziehmatrize eingeformt werden.

2. Portionseinheit nach Anspruch 1, wobei die Öffnungsfläche der mindestens einen Vertiefung kleiner ist als die Öffnungsfläche der Kavität.

3. Portionseinheit nach einem der vorherigen Ansprüche, wobei die Öffnungsfläche der mindestens einen Vertiefung 40 bis 95%, vorzugsweise 50 bis 90% und insbesondere 60 bis 80% der Öffnungsfläche der Kavität beträgt.

4. Portionseinheit nach einem der vorherigen Ansprüche, wobei der Umriss der Öffnungsfläche der Vertiefung dem Umriss der Öffnungsfläche der Kavität nachgebildet ist.

5. Portionseinheit nach einem der vorherigen Ansprüche, wobei der Umriss der Öffnungsfläche der Vertiefung aus dem Umriss der Öffnungsfläche der Kavität durch einen Verkleinerungsfaktor von 0,4 bis 0,95, vorzugsweise von 0,5 bis 0,9 und insbesondere von 0,6 bis 0,8 erhalten wird.

6. Portionseinheit nach einem der vorherigen Ansprüche, wobei die Vertiefung ein Volumen von 1 bis 8 ml, vorzugweise von 1 bis 6 ml aufweist.

7. Portionseinheit nach einem der vorherigen Ansprüche, wobei der Film eine Dicke von 10 bis 90 µm, vorzugsweise von 30 bis 60 µm aufweist.

8. Portionseinheit nach einem der vorherigen Ansprüche, wobei die Aufnahmekammer(n) in Schritt e) ein Füllvolumen von 2 bis 8 ml, vorzugsweise von 3 bis 7 ml aufweist (aufweisen).

9. Portionseinheit nach einem der vorherigen Ansprüche, wobei die Portionseinheit mindestens zwei, vorzugsweise mindestens drei und insbesondere mindestens vier Aufnahmekammern aufweist, wobei die Heizvorrichtung eine der Anzahl der Aufnahmekammern entsprechende Zahl an Vertiefungen aufweist, die in Schritt b) von den Teilbereichen des ersten Films bedeckt werden, welche in Schritt e) in die Kavität der Tiefziehmatrize unter Ausbildung der mindestens zwei, vorzugsweise mindestens drei und insbesondere mindestens vier Aufnahmekammern eingeformt werden unf die mindestens zwei, vorzugsweise mindestens drei und insbesondere mindestens vier Aufnahmekammern einander wenigstens anteilsweise umschließen.

10. Portionseinheit nach einem der vorherigen Ansprüche, wobei die Portionseinheit mindestens zwei, vorzugsweise mindestens drei und insbesondere mindestens vier Aufnahmekammern aufweist, wobei die Heizvorrichtung eine der Anzahl der Aufnahmekammern entsprechende Zahl an Vertiefungen aufweist, die in Schritt b) von den Teilbereichen des ersten Films bedeckt werden, welche in Schritt e) in die Kavität der Tiefziehmatrize unter Ausbildung der mindestens zwei, vorzugsweise mindestens drei und insbesondere mindestens vier Aufnahmekammern eingeformt werden und die Portionseinheit mindestens zwei, vorzugsweise mindestens drei und insbesondere mindestens vier Aufnahmekammern aufweist, welche rotationssymmetrisch um einen gemeinsamen Mittelpunkt angeordnet sind.

11. Portionseinheit nach einem der vorherigen Ansprüche, wobei der Aufnahmebehälter mindestens zwei, vorzugsweise mindestens drei und insbesondere mindestens vier Aufnahmekammern aufweist und das Verhältnis des Volumens der größten Aufnahmekammer zum Volumen der kleinsten Aufnahmekammer 4:1 bis 1:1, vorzugsweise 3:1 bis 1:1 beträgt.

12. Portionseinheit nach einem der vorherigen Ansprüche, wobei der wasserlösliche Film im Anschluss an den Schritt e) einen Gesamtstreckfaktor von 1,8 bis 2,6 aufweist.

13. Portionseinheit nach einem der vorherigen Ansprüche, wobei der wasserlösliche Film im Anschluss an den Schritt e) einen maximalen lokalen Streckfaktor von 1,8 bis 4, vorzugsweise von 2 bis 2,8 aufweist.

14. Portionseinheit nach einem der vorherigen Ansprüche, wobei in Schritt e) ein Flächengebilde mit mindestens 14, vorzugsweise mindestens 20 Aufnahmebehältern ausgebildet wird.

15. Portionseinheit nach einem der vorherigen Ansprüche, wobei die mindestens eine Aufnahmekammer des Aufnahmebehälters in einem weiteren Schritt f) befüllt und die befüllte Aufnahmekammer in einem nachfolgenden Schritt g) mittels eines zweiten Films, vorzugsweise mittels eines wasserlöslichen Films verschlossen wird.
